# EUROPEAN PATENT APPLICATION

(11) **EP 3 045 713 A1**
(43) Date of publication of application: **20.07.2016**
(21) Application number: 15151520.2
(22) Date of filing: 16.01.2015
(51) Int. Cl.: F02P 13/00, F02B 19/12, F02P 23/04

(54) **Laser ignited pre-combustion chamber assembly**

(71) Applicant: Caterpillar Energy Solutions GmbH, 68167 Mannheim (DE)
(72) Inventor: Schäfer, Friedrich, 67480 Edenkoben (DE); Stellwagen, Karl, 67227 Frankenthal (DE)
(74) Representative: Kramer Barske Schmidtchen Patentanwälte PartG mbB

(57) **Abstract**

The present disclosure relates to a laser ignited pre-combustion chamber assembly (20) for gaseous fuel internal combustion engines. The pre-combustion chamber assembly (20) may comprise a plurality of flow transfer passages (28, 28A, 28B) fluidly connecting a pre-combustion chamber (26) to a main combustion chamber (8) and each defining an inflow direction for combustion mixture, and an optical window (34) of a laser ignition device (30). Each of the inflow directions may pass by the optical window (34) for preventing the optical window (34) from being directly blown at by the combustion mixture entering the pre-combustion chamber (28) via the plurality of flow transfer passages (28, 28A, 28B).

## Description

### Technical Field

The present disclosure generally relates to a laser ignited pre-combustion chamber assembly for gaseous fuel internal combustion engines, a gaseous fuel internal combustion engine, and a method for operating an internal combustion engine operating at least partly on gaseous fuel.

### Background

Gaseous fuel internal combustion engines running at least partly on gaseous fuel, such as, for example, natural gas, commonly include pre-combustion chamber devices supporting in igniting a mixture of gaseous fuel and air within main combustion chambers of gaseous fuel internal combustion engines. For igniting a mixture of gaseous fuel and air (also referred to as combustion mixture) within the pre-combustion chamber, it is known to use a laser ignition device. Laser ignition devices may include a laser generating source and a lens system for focusing the laser light, such that a ignition point is located at a desired location within the pre-combustion chamber.

A transparent window is provided for preventing flames generated by the ignition to damage the laser ignition device. Specifically, the transparent window (also referred to as optical window, laser ignition window, pre-combustion chamber window, or separation window) is configured to thermally and mechanically isolate the laser ignition device from the pre-combustion chamber and also to seal the combustion chamber. The ignition point is typically located in the vicinity of the window within the pre-combustion chamber.

It is further known to provide a laser ignited pre-combustion chamber with a plurality of flow transfer passages fluidly connecting the pre-combustion chamber with the main combustion chamber. For ensuring that the amount of combustion mixture is sufficient at the ignition point, one of the plurality of flow transfer passages is arranged to directly supply combustion mixture to the ignition point during a compression stroke.

For example, US 9,375,911 B2 discloses a laser spark plug device for an internal combustion engine. The laser spark plug includes a pre-combustion chamber for receiving an ignitable medium and at least one overflow channel providing a fluid connection between an internal space of the pre-chamber and an external space surrounding the pre-combustion chamber. The at least one overflow channel is configured such that when a fluid flows through the overflow channel into the internal space of the pre-chamber, the result is a fluid flow having at least one eddy which rotates about an eddy axis forming an angle of more than approximately 45° with a longitudinal axis of the laser spark plug device.

Further laser ignited spark plugs are known from, for example, US 2013/0098331 A1, US 2013/01336021 A1, US 2014/0305394 A1, and WO 2011/138087 A2.

The present disclosure is directed, at least in part, to improving or overcoming one or more aspects of prior systems.

### Summary of the Disclosure

According to an aspect of the present disclosure, a laser ignited pre-combustion chamber assembly for gaseous fuel internal combustion engines with a cylinder head delimiting partially a main combustion chamber is disclosed. The laser ignited pre-combustion chamber assembly according to the present disclosure may comprise a first pre-combustion chamber section for mounting to the cylinder head, and an optical window of a laser ignition device mountable to the first pre-combustion chamber section. The optical window may partially delimit a pre-combustion chamber having a central pre-combustion chamber axis. The laser ignited pre-combustion chamber according to the present disclosure may further comprise a second pre-combustion chamber section partially delimiting the pre-combustion chamber. The second pre-combustion chamber section may have a plurality of flow transfer passages for fluidly connecting the pre-combustion chamber to the main combustion chamber. The plurality of flow transfer passages may define an inflow direction for a flow of a mixture of gaseous fuel and air from the main combustion chamber into the pre-combustion chamber. The inflow direction may include a tangential component with respect to a circle about the central pre-combustion chamber axis. Each of the inflow directions may pass by the optical window.

According to another aspect of the present disclosure, an internal combustion engine operating at least partly on gaseous fuel is disclosed. The internal combustion engine may comprise a piston, a cylinder receiving the piston, and a cylinder head mounted onto the cylinder. The piston, the cylinder and the cylinder head may define a main combustion chamber for combusting a combustion mixture therein. The internal combustion engine according to the present disclosure may further comprise a laser ignited pre-combustion chamber assembly according to the present disclosure that is mounted to the cylinder head.

According to another aspect of the present disclosure, a method for operating an internal combustion engine running at least partly on gaseous fuel and that includes a main combustion chamber and a pre-combustion chamber assembly with a pre-combustion chamber having a central pre-combustion chamber axis and being fluidly connected to the main combustion chamber via a plurality of flow transfer passages each defining an inflow direction for a flow of a combustion mixture is disclosed. The method according to the present disclosure may comprise supplying combustion mixture into the pre-combustion chamber via the plurality of flow transfer passages along the inflow directions, and igniting the mixture of gaseous fuel and air by an ignition laser generated by a laser ignition device and extending through an optical window partially defining the pre-combustion chamber. Each of the inflow directions may pass by the optical window.

Other features and aspects of this disclosure will be apparent from the following description and the accompanying drawings.

### Brief Description of the Drawings

Fig. 1 is a schematic drawing of an upper section of an engine cylinder covered by a cylinder head only shown in part as well, the cylinder head comprising an exemplary disclosed laser ignited pre-chamber assembly;
Fig. 2 is a sectional view of an exemplary disclosed pre-combustion chamber assembly;
Fig. 3 is a sectional view of a further exemplary disclosed pre-combustion chamber assembly;
Fig. 4 is a sectional view of a further exemplary disclosed pre-combustion chamber assembly;
Fig. 5 is a sectional view of a further exemplary disclosed pre-combustion chamber assembly;
Fig. 6 is a sectional view of a further exemplary disclosed pre-combustion chamber assembly; and
Fig. 7 is a sectional view of an exemplary disclosed pre-combustion chamber assembly taken along line VII - VII of Fig. 1.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that providing a pre-combustion chamber tip without a central flow transfer passage may prevent an optical window of a laser ignition device from being directly blown at by combustion mixture, which would otherwise pollute the optical window with, for example, oil matter, soot, etc. Specifically, the pre-combustion chamber tip is provided with flow transfer passages each defining inflow directions, respectively, which inflow directions pass by the optical window, i.e. which inflow directions do not extend through the optical window.

The present disclosure may be further based at least in part on the realization that providing additional flow transfer passages may compensate a lack of combustion mixture at a laser ignition ignition point within the pre-combustion chamber. For example, due to no central flow passage extending in parallel to a central pre-combustion chamber axis, there may be a lack of combustion mixture at the ignition point. By increasing the number of flow transfer passages, said lack of combustion mixture at the ignition point may be compensated. Further, the flow transfer passages may have different inclination angles with respect to a pre-combustion chamber axis. Said different inclination angels may lead to a predefined flow velocity and flow distribution within the pre-combustion chamber and may, hence, ensure that sufficient combustion mixture may be present at the ignition point.

Within the meaning of the present disclosure, each of the flow transfer passages define an "inflow direction" for a mixture of gaseous fuel and air entering a pre-combustion chamber via the flow transfer passages. In this context, the term "inflow direction" means a direction of the mixture of gaseous fuel and air at an oulet of the respective flow transfer passages at a pre-combustion chamber side. That is a direction along which the mixture of gaseous fuel and air substantially flows when leaving the flow transfer passage and entering the pre-combustion chamber.

Further, within the meaning of the present disclosure, an "axial component" of, for example, the inflow direction means that the inflow direction has a spatial orientation with at least a component extending in parallel to the respective axis of reference. For instance, an inflow direction having an axial component with respect to a central pre-combustion chamber axis may extend with an inclination with respect to the pre-combustion chamber axis.

Similarly, within the meaning of the present disclosure, a "tangential component" of, for example, the inflow direction means that the inflow direction has a spatial orientation with at least a component extending tangential with respect to a circle about the respective axis of reference. For instance, an inflow direction having a tangential component with respect to the central pre-combustion chamber axis may not be parallely to and may not intersect with the pre-combustion chamber axis.

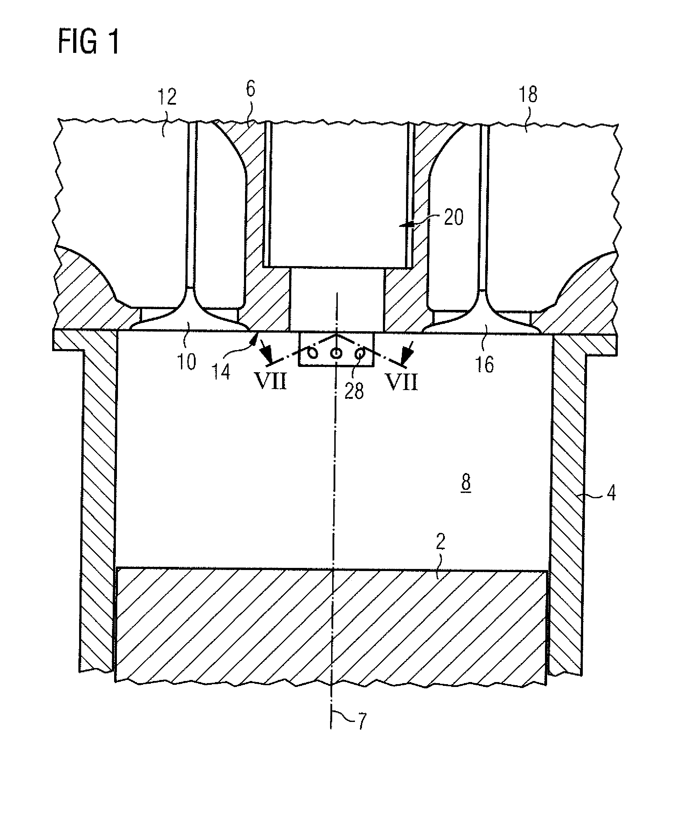

Referring now to the drawings to explain the general principle of the present disclosure by way of example. Fig. 1 depicts a piston 2 movably arranged in a cylinder or cylinder liner 4 of a gaseous fuel internal combustion engine (not shown in further detail). The cylinder 4 is covered by a cylinder head 6. The piston 2, the cylinder 4, and the cylinder head 6 together define a main combustion chamber 8 of the internal combustion engine. The cylinder 4 extends substantially along and defines a cylinder axis 7.

The piston 2 is reciprocatingly arranged in the cylinder 4 to move between a top dead center (TDC) and a bottom dead center (BDC) during operation of the internal combustion engine. For the purposes of the present disclosure, the internal combustion engine is considered as a four-stroke internal combustion engine operating at least partly on gaseous fuel such as a gaseous fuel internal combustion engine. One skilled in the art will recognize, however, that the internal combustion engine may be any type of engine (turbine, gas, diesel, natural gas, propane, two-stroke, etc.) that would at least partially operate on gaseous fuel and that would utilize a laser ignited pre-combustion chamber. Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

The cylinder head 6 includes at least one inlet valve 10, for example a poppet valve. The inlet valve 10 is accommodated in an inlet channel 12 opening in a piston sided face 14 of the cylinder head 6 for supplying a mixture of gaseous fuel and air into the main combustion chamber 8. Similarly, at least one outlet valve 16, for example also a poppet valve, is accommodated in an outlet channel 18 of the cylinder head 6 to guide exhaust gas out of the main combustion chamber 8.

According to Fig. 1, the cylinder head 6 further includes a laser ignited pre-combustion chamber assembly 20 including a plurality of flow transfer passages 28 that fluidly connects a pre-combustion chamber 26 (not shown in Fig. 1) within the pre-combustion chamber assembly 20 to the main combustion chamber 8. The pre-combustion chamber assembly 20 is configured to promote the combustion process within the main combustion chamber 8.

The pre-combustion chamber assembly 20 is installed in the cylinder head 6 via, for example, a thread. Alternatively, the pre-combustion chamber assembly 20 may be installed in the cylinder head 6 in any other fashion, such as, for instance, via welding, press-fitting, etc.

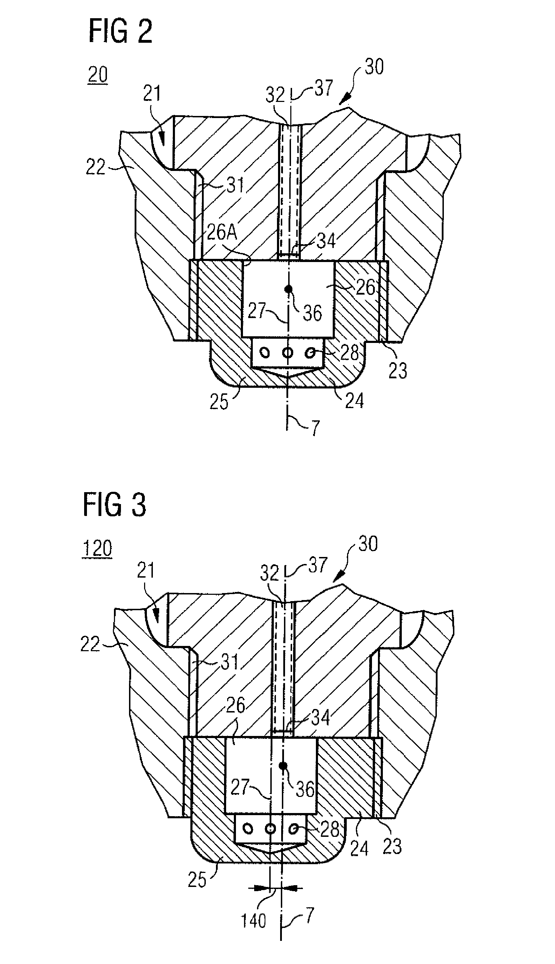

Referring to Fig. 2, a sectional view of an exemplary disclosed laser ignited pre-combustion chamber assembly 20 is illustrated. The pre-combustion chamber assembly 20 includes a pre-combustion chamber part consisting of a first pre-combustion chamber section (pre-combustion chamber top) 22 and a second pre-combustion chamber section (pre-combustion chamber tip) 24. The first and second pre-combustion chamber sections 22, 24 may be integrally formed, thereby forming a one-piece pre-combustion chamber body. In the exemplary embodiments disclosed herein and shown in the drawings, the first and second pre-combustion chamber sections 22, 24 are separate parts mountable to one another via, for example, a thread 23. In some embodiments, the first and second pre-combustion chamber sections 22, 24 may be mounted to one another via welding, soldering, or any other suitable manner.

The pre-combustion chamber assembly 20 includes a laser ignition device 30 mounted to a laser ignition device accommodating portion 21 provided by the pre-combustion chamber body, particularly by the first pre-combustion chamber section 22. For example, the laser ignition device 30 is mounted to the laser ignition device accommodating portion 21 via a thread 31. In some embodiments, the laser ignition device 30 may be mounted to the laser ignition device accommodating portion 21 via, for instance, press-fitting or welding. The laser ignition device 30 includes a laser generating source and a lens system (both not explicitly shown in the drawings) arranged within or above a laser path 32.

In some embodiments, the first pre-combustion chamber section 22 and/or the second pre-combustion chamber section 24 may be integrally formed with the cylinder head 6. In such embodiments, the cylinder head 6 may constitute the first and/or second pre-combustion chamber sections 22, 24.

In some further embodiments, the second pre-combustion chamber section 24 may be attached to the laser ignition device 30 via, for example, welding. Then, such assembly consisting of the second pre-combustion chamber section 24 attached to the laser ignition devie 30 may be mounted to the first pre-combustion chamber part 22 that may be integrally formed with the cylinder head 6.

In some further embodiments, the second pre-combustion chamber section 24 may be placed into the second pre-combustion chamber section 22 integrally formed with the cylinder head. Then, the laser ignition device 30 may be mounted to the first pre-combustion chamber section 22 thereby clamping the second pre-combustion chamber section 24 to the cylinder head 6.

As shown in the drawings, the laser path 32 is a bore provided within the first pre-combustion chamber section 22. The laser path 32 has, therefore, a cylindrical shape. In further exemplary embodiments, the laser path 32 may have a conical shape tapering towards the pre-combustion chamber 26, or any other suitable shape.

A transparent optical window 34 is arranged within the laser path 32 at a pre-combustion chamber side and at least partially delimits the pre-combustion chamber 26. It is preferred that the optical window 34 is in the vicinity of an outlet of the laser path 32 that opens into the pre-combustion chamber 26. The optical window 34 is configured to couple an ignition laser generated by the laser generating source and focused by the lens system into the pre-combustion chamber 26. The lens system is configured to focus the ignition laser, such that a focal point of the ignition laser is located within the pre-combustion chamber 26. The focal point of the ignition laser defines a ignition point 36 where a combustion event within the pre-combustion chamber 26 is initiated.

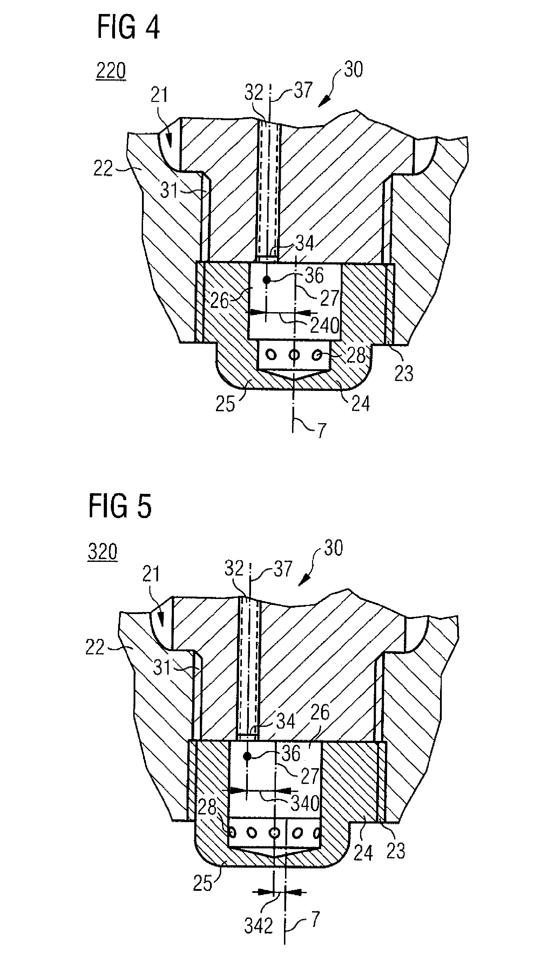

As shown in Figs. 2 to 4, and 6, the pre-combustion chamber 26 includes a substantially stepped configuration. In some embodiments, as exemparily shown in Fig. 5, the pre-combustion chamber 26 may include a cylindrical configuration. In some further embodiments, the pre-combustion chamber 26 may include any suitable configuration.

As shown in the drawings, the laser path 32 extends along a laser axis 37 along which the ignition laser generally extends from the laser generating source through the lens system and the optical window 34 to the ignition point 36.

The second pre-combustion chamber section 24 partially delimits the pre-combustion chamber 26 and includes the flow transfer passages 28. The pre-combustion chamber 26 tapers in direction to the main combustion chamber 8. Alternatively, the pre-combustion chamber 26 may have any other suitable shape, such as, for instance, a cylindrical shape, a pyramidal shape, a conical shape, and combinations thereof. For example, the pre-combustion chamber 26 may have a volume ranging from about 0.5 % to about 10 % of the compression volume of the cylinder 4 (see Fig. 1).

As illustrated in the embodiment shown in Fig. 2, the pre-combustion chamber 26 has a central pre-combustion chamber axis 27 that is aligned with the cylinder axis 7. In such case, it may be ensured that the flame front generated during combustion within the pre-combustion chamber 26 advances into the main combustion chamber 8 in a symmetrical manner with respect to the main combustion chamber 8 and the cylinder axis 7.

In Fig. 2, the second pre-combustion chamber section 24 includes a second pre-combustion chamber section axis (not explicitly denoted with a reference sign in Fig. 2) that is aligned with the central pre-combustion chamber axis 27. Thus, the pre-combustion chamber 26 is symmetrically provided in and delimited by the second pre-combustion chamber section 24.

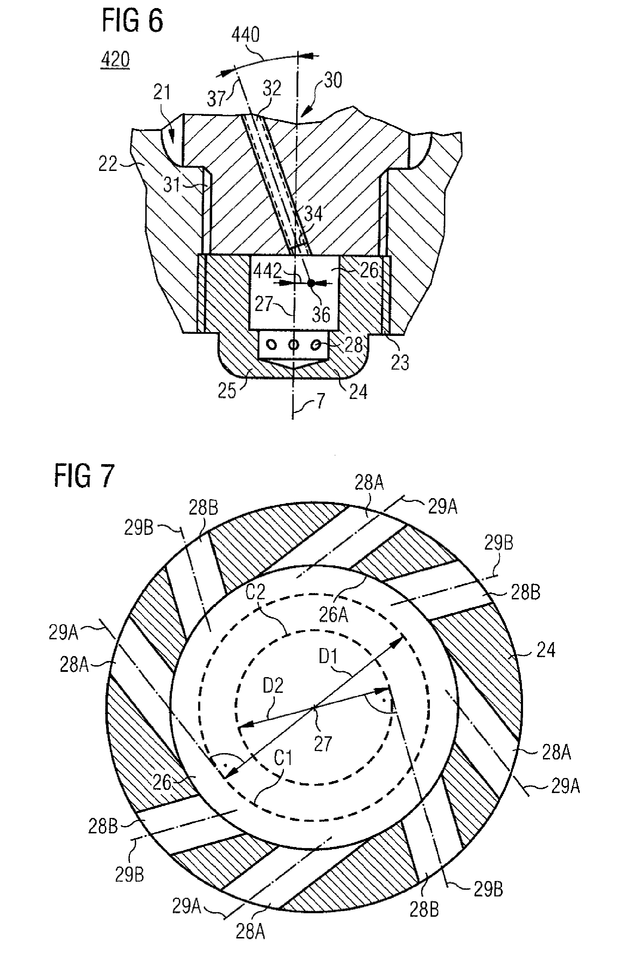

To fluidly connect the pre-combustion chamber 26 to the main combustion chamber 8 (see Fig. 1), the flow transfer passages 28 are provided. The flow transfer passages 28 extend through a tip portion of the second pre-combustion chamber section 24 along respective flow transfer passage axes 29 (see Fig. 7). The flow transfer passages 28 may be bores with a cylindrical shape. In some embodiments, the flow transfer passages 28 may include conical or step-like shape and may have roundings and/or chamfers at their respective inlets and/or outlets.

In order to impart a swirl into the combustion mixture whiling inflowing from the main combustion chamber 8 (see Fig. 1) into the pre-combustion chamber 26 during a compression stroke, the flow transfer passages 28 are arranged to extend in a tangential manner such that the flow transfer passage axes 29 of the flow transfer passages 28 have tangential components with respect to a circle around the pre-combustion chamber axis 27. However, it is contemplated that, in some embodiments, the flow transfer passages 28 may not necessarily have a tangential component as described above.

As shown in the drawings, the second pre-combustion chamber section 24 is dome-shaped, or may be flattened or otherwise curved, with a closed end 25 opposite to the optical window 34. Hence, besides the flow transfer passages 28, for example, no further central flow transfer passage extending in parallel to the pre-combustion chamber axis 27 is provided.

In some embodiments, the first pre-combustion chamber section 22 may further include a fuel supply channel (not explicitly shown in the drawings) that opens into the pre-combustion chamber 26. Said fuel supply channel may be configured to supply, for example, additional gaseous fuel into the pre-combustion chamber 26 for enriching the same with, for instance, gaseous fuel, such as natural gas.

Each of the flow transfer passages 28 may define an inflow direction for the combustion mixture when entering the pre-combustion chamber 26. The inflow directions define a flow direction of the combustion mixture when leaving the associated flow transfer passage 28 and entering the pre-combustion chamber 26. The flow transfer passages 28 are arranged such that its inflow directions pass by the optical window 34, i.e. the inflow directions do not extend through the optical window 34.

In the embodiment shown in Fig. 2, the cylinder axis 7, the pre-combustion chamber axis 27, the laser axis 37, and the second pre-combustion chamber section axis extend aligned to one another, such that a symmetrical pre-combustion chamber assembly 20 is provided. Hence, the ignition point 36 lies on the pre-combustion chamber axis 27. Therefore, radial distances between the ignition point 36 and an inner wall 26A of the pre-combustion chamber 26 are equal.

In Figs. 3 to 6, further exemplary disclosed pre-combustion chamber assemblies 120, 220, 320 are shown. The pre-combustion chamber assemblies 120, 220, 320 of Figs. 3 to 5 are substantially identical to the pre-combustion chamber assembly 20, but differ in the arrangement of the second pre-combustion chamber section 24, the laser ignition device 30, the pre-combustion chamber 26, and the main combustion chamber 8 relative to one another. Therefore, same elements are denoted with same reference numerals.

In Figs. 3 to 6, the ignition point 36 is offset the respective pre-combustion chamber axis 27. Due to the tangentially arranged flow transfer passages 28, a swirl is imparted into the combustion mixture when being pushed into the pre-combustion chamber 26 by an upward movement the piston 2 during the compression stroke. Thus, in the central region of the pre-combustion chamber 26 (which extends along the pre-combustion chamber axis 27), there might be not sufficient combustion mixture, such that a reliable and stable combustion may be no more ensured. By providing an offset between the ignition point 36 and the pre-combustion chamber axis 27, the ignition point 36 may be in a pre-combustion chamber region where sufficient combustion mixture may be present.

Due to the tangentially arranged flow transfer passages 28, a swirl about the pre-combustion chamber axis 27 is imparted into the combustion mixture when being pushed into the pre-combustion chamber 26. Thus, due to the imparted swirl, the combustion mixture underlies a centrifugal force that forces the combustion mixture in a radially outward direction, i.e. towards the inner wall 26A of the pre-combustion chamber 26. Hence, the higher the radial distance with respect to the central pre-combustion chamber axis 27, the higher the density of combustion mixture (the more combustion mixture is accumulated).

It is known that the higher the radial distance from the pre-combustion chamber axis 27, the higher the circumferential velocity of the combustion mixture. On the one hand, it is desired to provide the ignition point 36 offset the central pre-combustion chamber axis 27 in a pre-combustion region where sufficient combustion mixture is present. On the other hand, it may need to be ensured that the circumferential velocity of the combustion mixture at the ignition point 36 is not too high, such that no blowing out of a flame generated by the laser ignition device 30 may occur.

For example, in the pre-combustion chamber assembly 120 of Fig. 3, the central pre-combustion chamber axis 27 extends parallel to the cylinder axis 7 and the laser axis 37, respectively, with an offset 140. Due to the offset 140, the ignition point 36 is radially offset the pre-combustion chamber axis 27, such that an asymmetric combustion event within the pre-combustion chamber 26 occurs.

Referring to Fig. 4, the pre-combustion chamber axis 27 and the cylinder axis 7 are aligned to one another, wherein the laser axis 37 is offset the pre-combustion chamber axis 27 and the cylinder axis 7, respectively, by an offset 240. Due to the offset 240, the ignition point 36 is radially offset the pre-combustion chamber axis 27, such that an asymmetric combustion event within the pre-combustion chamber 26 occurs.

With respect to Fig. 5, the cylinder axis 7, the pre-combustion chamber axis 27, and the laser axis 37 are parallel and offset to one another by offsets 340, 342, respectively. For example, the pre-combustion chamber axis 27 is offset the laser axis 37 by the offset 340, such that the ignition point 36 is offset the pre-combustion chamber axis 27. Further, the pre-combustion chamber axis 27 is offset the cylinder axis by the offset 342.

Due to the offsets 140, 240, 340 (see Figs. 3 to 5) between the laser axis 37 and the pre-combustion chamber axis 27, the circumferentially flowing combustion mixture may at least partially flow over the optical window 34 in a tangential manner, thereby removing at least partially any foreign matter, such as, for instance, soot, accumulated on the pre-combustion chamber side surface of the optical window 34.

In each of the embodiments shown in Figs. 3 to 5, the second pre-combustion chamber section axis and the central pre-combustion chamber axis 27 may be parallel and aligned to one another. However, in further embodiments, the second pre-combustion chamber section axis and the central pre-combustion chamber axis 27 may be parallel and offset to one another (as exemplarily shown in Fig. 5). In further embodiments, the second pre-combustion chamber axis and the central pre-combustion chamber axis 27 may obliquely extend to one another.

Fig. 6 illustrates a further exemplary disclosed pre-combustion chamber assembly 420. In the pre-combustion chamber assembly 420 of Fig. 6, the cylinder axis 7 and the pre-combustion chamber axis 27 are aligned to one another, wherein the laser axis 37 extends under an angle 440 with respect to the pre-combustion chamber axis 27. Hence, the ignition point 36 is offset the pre-combustion chamber axis 27 by an offset 442.

As shown in Fig. 6, the laser axis 37 intersects with the pre-combustion chamber axis 27. However, in some exemplary embodiments, the laser axis 37 may extend with respect to the pre-combustion chamber axis 27 in a skew manner, i.e. the laser axis 37 does not intersect with the pre-combustion chamber axis 27.

It is explicitly stated that the cylinder axis 7, the pre-combustion chamber axis 27, the second pre-combustion section axis and the laser axis 37 may be arranged relative to one another in any desired manner and in any desired combination as shown in Figs. 3 to 6. That is, the obliquely extending laser axis 37 of Fig. 6 may also be transferred to the embodiments shown in Figs. 3 to 5, and vice versa.

With respect to Fig. 7, a sectional view of the second pre-combustion chamber section 24 taken along line VII - VII of Fig. 1 is shown. As can be seen in Fig. 7, there are two groups of flow transfer passages 28, namely a first group of first flow transfer passages 28A and a second group of second flow transfer passages 28B. Each of the first flow transfer passages 28A extends along a respective first flow transfer passage axis 29A, and each of the second flow transfer passages 28B extends along a respective second flow transfer passage axis 29B.

The first flow transfer passage axes 29A tangentially extend with respect to a first circle C1 extending about the pre-combustion chamber axis 27 with a first diameter D1. The second transfer passage axes 29B tangentially extend with respect to a second circle C2 extending about the pre-combustion chamber axis 27 with a second diameter D2 unequal to the first diameter D1. In the embodiment shown in Fig. 7, the second diameter D2 is, for example, smaller than the first diameter D1.

Therefore, the first flow transfer passage axes 29A include a different angle than the second flow transfer passage axes 29B with respect to a tangent to a circle defined by the inner wall 26A of the pre-combustion chamber 26. Due to the different angles, the swirl imparted into the combustion mixture by the first flow transfer passages 28A is unequal to the swirl imparted into the combustion mixture by the second flow transfer passages 28B.

The different tangential angles of the first and second flow transfer passages 28A, 28B may lead to different inflow velocities of the combustion mixture. As the tangential angle of the first flow transfer passage axes 29A is greater than the tangential angle of the second flow transfer passage axes 29B, the combustion mixture inflow through the second flow transfer passages 28B may partially decelerate the combustion mixture inflow through the first flow transfer passages 28A.

In the configuration shown in Fig. 7, each of the first and second flow transfer passage axes 29A, 29B extend with an identical inclination angle with respect to the pre-combustion chamber axis 27. However, in some configurations, the first flow transfer passage axes 29A may extend with a first inclination angle with respect to the pre-combustion chamber axis 27 that is different to a second inclination angle of the second flow transfer passage axes 29B with respect to the pre-combustion chamber axis 27.

As shown in Fig. 7, the first and second flow transfer passages 28A, 28B are alternately arranged with respect to one another. However, in further configurations, the first and second flow transfer passages 28A, 28B may be arranged in any other suitable manner.

### Industrial Applicability

In the following, operation of a gaseous fuel internal combustion engine including an exemplary disclosed laser ignited pre-combustion chamber assembly 20, 120, 220, 320, 420 is described with respect to Figs. 1 to 7.

During a compression stroke of the internal combustion engine, at least some of the combustion mixture within the main combustion chamber 8 is pushed into the pre-combustion chamber 26 through the flow transfer passages 28 by an upward movement of the piston 2. Due to the tangentially arrange flow transfer passages 28, a predefined swirl is imparted into the combustion mixture flow when entering the pre-combustion chamber 26. Therefore, the combustion mixture within the pre-combustion chamber substantially flows circumferentially about the pre-combustion chamber axis 27 in a helical manner.

Subsequently, the laser ignition device 30 generates laser light that is focused by the lens system and, then advances through the optical window 34 into the pre-combustion chamber 26 and initiates an ignition event at the ignition point 36. Due to the cup-like shaped closed end 25 of the second pre-combustion chamber section 24 that has preferably no central flow transfer passage extending along the pre-combustion chamber axis 27, no flow of combustion mixture may perpendicularly hit against the optical window 34 (see, for example, Fig. 2). This may reduce accumulation of combusted foreign matter at the pre-combustion chamber side surface of the optical window 34.

In some embodiments, the cup-like shaped closed end 25 may include additional flow transfer passages that respectively define inflow directions passing by the optical window 34, i.e. which do not extend through the optical window 34. For instance, the cup-like shaped end 25 may include a central flow transfer passage that extends along a flow transfer passage axis that is obliquely arranged with respect to the pre-combustion chamber axis 27.

Returning to Fig. 2, in order to compensate a potential lack of combustion mixture at the ignition point 36 lying on the pre-combustion chamber axis 27, the second pre-combustion chamber section 24 may include additional flow transfer passages 28, such as, for example, the second flow transfer passages 28B in addition to the first flow transfer passages (see Fig. 7). For example, the first and second flow transfer passages 28A and 28B may have in total a flow transfer passage volume ranging from about 0.5 % to about 15 % of the pre-combustion chamber volume.

The flow transfer passages 28 may have inlets at the pre-combustion chamber side that are provided with a predefined cross-sectional area. As described above, the inlets may be provided with chamfers and/or roundings, respectively. A ratio of a total cross-sectional area of the pre-combustion chamber side inlets of the flow transfer passages 28 and the pre-combustion chamber volume may range from about 0.1 % to about 5 %..

Although the preferred embodiments of this invention have been described herein, improvements and modifications may be incorporated without departing from the scope of the following claims.

## Claims

1. A laser ignited pre-combustion chamber assembly (20) for gaseous fuel internal combustion engines with a cylinder head (6), the laser ignited pre-combustion chamber assembly (20) comprising:
a first pre-combustion chamber section (22) for mounting to the cylinder head (6);
an optical window (34) of a laser ignition device (30) mountable to the first pre-combustion chamber section (22), the optical window (34) partially delimiting a pre-combustion chamber (26) having a central pre-combustion chamber axis (27); and
a second pre-combustion chamber section (24) partially delimiting the pre-combustion chamber (26), the second pre-combustion chamber section (24) having a plurality of flow transfer passages (28, 28A, 28B) for fluidly connecting the pre-combustion chamber (26) to a main combustion chamber (8), each of the plurality of flow transfer passages (28, 28A, 28B) defining an inflow direction for a flow of a mixture of gaseous fuel and air from the main combustion chamber (8) into the pre-combustion chamber (26), the inflow direction including a tangential component with respect to a circle (C1, C2) about the central pre-combustion chamber axis (27),
wherein each of the inflow directions passes by the optical window (34).

2. The laser ignited pre-combustion chamber assembly (20) of claim 1, wherein the second pre-combustion chamber section (24) includes a cup-like shaped end (25) being axially closed opposite to the optical window (34) with respect to the central pre-combustion chamber axis (27).

3. The laser ignited pre-combustion chamber assembly (20) of claim 2, wherein the cup-like shaped end (25) of the second pre-combustion chamber section (24) is free of flow transfer passages that have only axial components with respect to the central pre-combustion chamber axis (27).

4. The laser ignited pre-combustion chamber assembly (20) of any one of claims 2 or 3, wherein the cup-like shaped end (25) of the second pre-combustion chamber section (24) is free of a central flow transfer passage extending parallel and aligned to the central pre-combustion chamber axis (27).

5. The laser ignited pre-combustion chamber assembly (20) of any one of claims 2 to 4, wherein the cup-like shaped end (25) of the second pre-combustion chamber section (24) includes only flow transfer passages (28, 28A, 28B) that define an inflow direction with a tangential component with respect to the central pre-combustion chamber axis (27).

6. The laser ignited pre-combustion chamber assembly (20) of any one of the preceding claims, wherein the plurality of flow transfer passages (28) includes first flow transfer passages (28A) extending along respective first flow transfer passage axes (29A) and second flow transfer passages (28B) extending along respective second flow transfer passage axes (29B), the first flow transfer passage axes (29A) defining a first inflow direction having a first axial component with respect to the central pre-combustion chamber axis (27), the second flow transfer passage axes (29B) defining second inflow directions having a second axial component with respect to the central pre-combustion chamber axis (27), the first axial component being unequal to the second axial component, such that a first inclination angle of the first component with respect to the central pre-combustion chamber axis (27) is unequal to a second inclination angle of the second component with respect to the central pre-combustion chamber axis (27).

7. The laser ignited pre-combustion chamber assembly (20) of any one of the preceding claims, wherein the plurality of flow transfer passages (28) includes first flow transfer passages (28A) extending along first flow transfer passage axes (29A), respectively, and second flow transfer passages (28B) extending along second flow transfer passage axes (29B), respectively, the first flow transfer passage axes (29A) defining first inflow directions each having a first tangential component with respect to a first circle (C1) with a first diameter (D1) about the central pre-combustion chamber axis (27), the second flow transfer passage axes (29B) defining second inflow directions each having a second tangential component with respect to a second circle (C2) with a second diameter (D2) about the central pre-combustion chamber axis (27), the first diameter (D1) being unequal to the second diameter (D2).

8. The laser ignited pre-combustion chamber assembly (20) of any one of the preceding claims, wherein each of the inflow directions extend in a skew manner with respect to the central pre-combustion chamber axis (27).

9. The laser ignited pre-combustion chamber assembly (20) of any one of the preceding claims, wherein a laser beam axis (37) extends through the optical window (34) in parallel and aligned to the central pre-combustion chamber axis (27).

10. The laser ignited pre-combustion chamber assembly (20) of any one of the preceding claims, wherein the flow transfer passages (28, 28A, 28B) include in total a flow transfer passage volume ranging from about 0.5 % to about 15 % of a pre-combustion chamber volume.

11. The laser ignited pre-combustion chamber assembly (20) of any one of the preceding claims, wherein the flow transfer passages (28, 28A, 28B) include pre-combustion chamber side inlets with a predefined cross-sectional area, wherein a ratio of a total cross-sectional area of the pre-combustion chamber side inlets of the flow transfer passages (28, 28A, 28B) and a pre-combusion chamber volume ranges from about 0.1 % to about 5 %.

12. An internal combustion engine operating at least partly on gaseous fuel, comprising:
a piston (2);
a cylinder (4) receiving the piston (2);
a cylinder head (6) mounted onto the cylinder (4), wherein the piston (2), the cylinder (4), and the cylinder head (6) define a main combustion chamber (8) for combusting a combustion mixture therein; and
a pre-combustion chamber assembly (20) of any one of the preceding claims that is mounted to the cylinder head (6).

13. A method for operating an internal combustion engine running at least partly on gaseous fuel and that includes a main combustion chamber (8) and a pre-combustion chamber assembly (20) with a pre-combustion chamber (26) having a central pre-combustion chamber axis (27) and being fluidly connected to the main combustion chamber (8) via a plurality of flow transfer passages (28, 28A, 28B) each defining an inflow direction for a flow of a combustion mixture, the method comprising:
supplying combustion mixture into the pre-combustion chamber (26) via the plurality of flow transfer passages (28, 28A, 28B) along the inflow directions; and
igniting the mixture of gaseous fuel and air by an ignition laser beam generated by a laser ignition device (30) and extending through an optical window (34) partially defining the pre-combustion chamber (26),
wherein each of the inflow directions passes by the optical window (34).

14. The method of claim 13, wherein the inflow direction includes a tangential component with respect to a circle (C1, C2) extending about the central pre-combustion chamber axis (27) for imparting a swirl into the combustion mixture.

15. The method of any one of claims 13 or 14, wherein the inflow direction includes an axial component with respect to the central pre-combustion chamber axis (27).
